# EUROPÄISCHE PATENTANMELDUNG

(11) **EP 1 918 727 A1**
(43) Veröffentlichungstag der Anmeldung: **07.05.2008**
(21) Anmeldenummer: 07017924.7
(22) Anmeldetag: 13.09.2007
(51) Int. Cl.: G01R 31/26, G01R 31/28, H01L 31/042, G08B 13/22, G01R 31/02

(54) **Verfahren zur Überwachung eines Photovoltaikgenerators**

(30) Priorität: 03.11.2006 DE 102006052295
(71) Anmelder: SMA Technologie AG, 34266 Niestetal (DE)
(72) Erfinder: Prior, Oliver, 34431 Marsberg (DE); Juchem, Ralf, Dr., 34266 Niestetal (DE); Victor, Matthias, Dr., 34266 Niestetal (DE); Frank, Oliver, 30163 Hannover (DE); Schlabbach, Juergen, 33605 Bielefeld (DE)
(74) Vertreter: Walther, Robert

(57) **Zusammenfassung**

Gegenstand der vorliegenden Erfindung ist ein Verfahren zur Überwachung eines Photovoltaikgenerators (1) zur Stromerzeugung mit einer Anzahl zwischen zwei Außenanschlüssen verschalteten Solarzellen durch wiederholtes Einspeisen eines Stroms mit einem Frequenzspektrum in den Generatorstromkreis, dabei jeweils Erfassung eines Frequenzganges im Frequenzspektrum mit dem eingespeisten Strom als Eingangsgröße und einer elektrischen Größe des Generators als Ausgangsgröße, und Erfassung einer Veränderung des Frequenzganges zur Überwachung des Photovoltaikgenerators (1), falls eine Veränderung beim wiederholten Einspeisen auftritt.

## Beschreibung

Die Erfindung betrifft ein Verfahren zur Überwachung eines Photovoltaikgenerators zur Stromerzeugung mit einer Anzahl zwischen zwei Außenanschlüssen verschalteten Solarzellen.

Zur Diebstahlüberwachung bei Photovoltaikgeneratoren ist es bekannt, bei sprunghaften Stromänderungen des Generators auf einen Diebstahl zu schließen. Dies hat aber den Nachteil, dass, da der Generator nachts keinen Strom liefert, somit dieses Verfahren nur am Tag einsetzbar ist.

Ein Verfahren zum Schutz eines Solarmdoduls vor unbefugter Manipulation oder Diebstahl ist aus der DE 101 61 480 B4 bekannt. Dieses Verfahren beruht auf der Erfassung einer Unterbrechung einer Reihenschaltung. Hierbei wird ein Wechselstrom eingespeist. Auch kann ein getaktetes Einspeisen des Messstroms erfolgen. Durch das Einspeisen des Messstroms in Intervallen ist kein ständiger Stromfluss erforderlich. Diese Ströme sind vom Gleichstrom des Generators unterschiedlich. Dieses Verfahren kann auch in den Nachtstunden eingesetzt werden.

Ein anderes Verfahren befasst sich mit der Erfassung von Lichtbögen in Solargeneratoren (WO 95/25374). Hierbei wird die ausgehende elektromagnetische Strahlung detektiert. Lichtbögen entstehen bei Kurzschluss oder Strompfadunterbrechung. Die erforderlichen Schaltungen zur Ermittlung von Lichtbögen sind jedoch aufwändig und teuer.

Der Erfindung liegt die Aufgabe zugrunde, ein kostengünstiges Überwachungsverfahren, insbesondere zur Diebstahlüberwachung, zu finden, das in den Nachtstunden funktionsfähig ist.

Diese Aufgabe wird erfindungsgemäß bei einem Verfahren zur Überwachung eines Photovoltaikgenerators zur Stromerzeugung mit einer Anzahl zwischen zwei Außenanschlüssen verschalteten Solarzellen durch wiederholtes Einspeisen eines Stroms mit einem Frequenzspektrum in den Generatorstromkreis gelöst, dabei jeweils Erfassung eines Frequenzganges im Frequenzspektrum mit dem eingespeisten Strom als Eingangsgröße und einer elektrischen Größe des Generators als Ausgangsgröße, und Erfassung einer Veränderung des Frequenzganges zur Überwachung des Photovoltaikgenerators falls eine Veränderung beim wiederholten Einspeisen auftritt.

Die Erfindung beruht auf der Erkenntnis, dass eine Änderung des Frequenzganges ein zuverlässiges Anzeichen für einen Diebstahl oder ganz allgemein eine Manipulation am Solargenerator darstellt. So ändern sich nur bestimmte Stromamplituden einer Frequenz bei Entnahme eines Solarmoduls, während andere Stromamplituden unbetroffen bleiben. Bei Fehlen eines Moduls ändern sich Kapazitäten und Induktivitäten bzw. Impedanzen und somit das Frequenzverhalten des Generators. Wird ein Strom mit einem Frequenzspektrum eingespeist, so entsteht ein typisches Frequenzverhalten, wenn eine Generatoränderung vorgenommen wird.

Es kann der Frequenzgang d. h. die Abhängigkeit einer elektrischen Größe, wie Impedanz, Kapazität, Induktivität, Strom oder Spannung von der eingespeisten Frequenz erfasst werden.

Auch Lichtbögen können erkannt werden. Bei Lichtbögen ändert sich das Frequenzverhalten. Lichtbögen können durch fehlerhafte Kontaktstellen verursacht werden und Brände verursachen. Das Überwachungsverfahren dient daher auch zur Brandvorbeugung.

Ein Vorteil der Erfindung ist, dass eine Diebstahlüberwachung bzw. ein Schutz vor Manipulation auch in den Nachtstunden möglich ist, d.h. auch dann, wenn der Solargenerator keinen Strom liefert.

Die Erfindung kann ein einziges Messprinzip für die Überwachung verschiedener Schäden bzw. Manipulation am Generator einschließlich des Diebstahls des Generators nutzen. Dadurch ergeben sich Kostenvorteile.

Außerdem ist das erfindungsgemäße Verfahren sehr zuverlässig, da eine aufwändige Erfassung elektromagnetischer Strahlung nicht erforderlich ist.

Eine Diebstahlüberwachung erfolgt mit dem erfindungsgemäßen Verfahren bevorzugt nur in den Nachtstunden, wobei während der Tagstunden ein zweites Verfahren eingesetzt wird. Das zweite Verfahren bedient sich insbesondere der Verwendung eines Referenzsensors und hier vorzugsweise eines Referenzsolargenerators. Durch diese Maßnahme ist eine optimale Diebstahlsicherung gegeben. In den Tagstunden wird beispielsweise eine abrupte Stromunterbrechung als Anzeichen für einen Diebstahl gewertet. Eine Stromänderung erfolgt nämlich verhältnismäßig langsam, wenn beispielsweise eine Wolke den Generator verdeckt. In den Nachtstunden dagegen kommt das erste Verfahren mit der Frequenzgangüberwachung zum Einsatz, da es besonders zuverlässig arbeitet, wenn der Solargenerator keinen Strom erzeugt.

Alternativ oder zusätzlich kann das Verfahren auch zur Lichtbogenüberwachung durch Kontakttrennung oder zur Überprüfung schadhafter Kontakte des Photovoltaikgenerators eingesetzt werden. Auf diese Weise lassen sich Brände durch eine fehlerhafte elektrische Kontaktierung vermeiden. Anstelle oder zusätzlich zu einem Alarmsignal kann der Solargenerator bei Auftreten eines Lichtbogens abgeschaltet werden.

Eine relativ einfache, aber dennoch wirkungsvolle Weiterbildung der Erfindung zeichnet sich dadurch aus, dass eine Hilfsgröße aus gemessenen Strom- oder Spannungskurven gebildet wird und die Veränderung der Hilfsgröße überwacht wird, wobei oberhalb eines Schwellwertes der Veränderung der Hilfsgröße ein Alarmsignal erfolgt. Eine Überwachungsschaltung kann auf relativ einfache Art und Weise geschaffen werden. Vorteilhaft ist es, wenn die Hilfsgröße aus der Summe der gemessenen Strom- oder Spannungsamplituden gebildet wird oder wenn die Hilfsgröße aus einer Integration der Flächen unter den gemessenen Kurven erfolgt. Beide Lösungen lassen sich rechner- oder mikroprozessorgesteuert leicht verwirklichen.

Besonders günstig ist es, wenn eine Einspeisung des Stroms mit einem Frequenzspektrum mit einem ersten Wandler mit Primär- und Sekundärwicklung, der an den Gleichstromkreis des Generators angeschlossen ist, und eine Erfassung des Frequenzspektrums mit einem zweiten Wandler mit Primär- und Sekundärwicklung erfolgt, der in Reihe mit dem ersten Wandler angeordnet ist. Dadurch kann eine Überwachungsschaltung in Reihe mit dem Generator angeschlossen werden und muss nur mit einem Außenanschluss verbunden werden. Der Ausgang des Solargenerators stellt somit praktisch den Ausgang der Überwachungsschaltung dar. Die durch die Überwachungsschaltung erzeugten Verluste sind vernachlässigbar, da der in dem Wandler erzeugte Gleichstromabfall im Wesentlichen gegen null strebt.

Optimal ist es, wenn eine Einspeisung von sinusförmigen Frequenzen in den Gleichstromkreis des Generators erfolgt. Durch die Veränderung eines Signal ergeben sich mehrere Wechselspannungen, so dass ein Frequenzbereich durchfahren werden kann. Eine Frequenzänderung kann kontinuierlich mit Hilfe eines Funktionsgenerators aber auch sprunghaft erzeugt werden.

Mit Vorteil wird eine Änderung einer durch das Frequenzspektrum messbaren elektrischen Größe festgestellt. Es kann direkt die Impedanzänderung des Generators gemessen werden. Dies ist möglich, weil sich bei plötzlich fehlenden Modulen die Leitungsimpedanzen ändern aber auch vorhandene Kapazitäten plötzlich unterschiedlich sind. Die Leitungswege im Generator sind relativ lang, so dass relativ große und gut messbare Impedanzen vorhanden sind. Grundsätzlich kann auch nur eine Kapazität oder eine Induktivität gemessen werden. Vorteilhaft ist, dass auch bei Parallelschaltung von Modulen eine Erfassung möglich ist. Während eine auf Leitungsunterbrechung beruhende Messung nur bei Reihenschaltungen von Solarmodulen möglich ist, kann die Erfindung bei Reihen- und/oder Parallelschaltungen von Solarmodulen eingesetzt werden.

Weitere vorteilhafte Ausgestaltungen der Erfindung den Unteransprüchen zu entnehmen.

Anhand der Zeichnungen wird die Erfindung nachstehend beispielhaft näher erläutert.
- Fig. 1: zeigt eine Darstellung einer Photovoltaikanlage mit mehreren in Reihe und/oder parallel geschalteten Solarmodulen;
- Fig. 2: zeigt ein Ersatzschaltbild einer Solarzelle einer Anlage;
- Fig. 3: zeigt ein Ersatzschaltbild einer mäanderförmigen Solarzellenanordnung;
- Fig. 4: zeigt eine Schaltungsanordnung zur Messung eine Frequenzganges;
- Fig. 5: zeigt ein Ersatzschaltbild der in Fig. 4 dargestellten Anordnung;
- Fig. 6: zeigt ein Funktionsschaltbild einer bevorzugten Ausführungsform der Schaltungsanordnung zur Ausführung des erfindungsgemäßen Verfahrens;
- Fig. 7: zeigt eine erste Darstellung eines Frequenzgangs mit und ohne Teilgenerator;
- Fig. 8: zeigt eine zweite Darstellung eines Frequenzgangs.

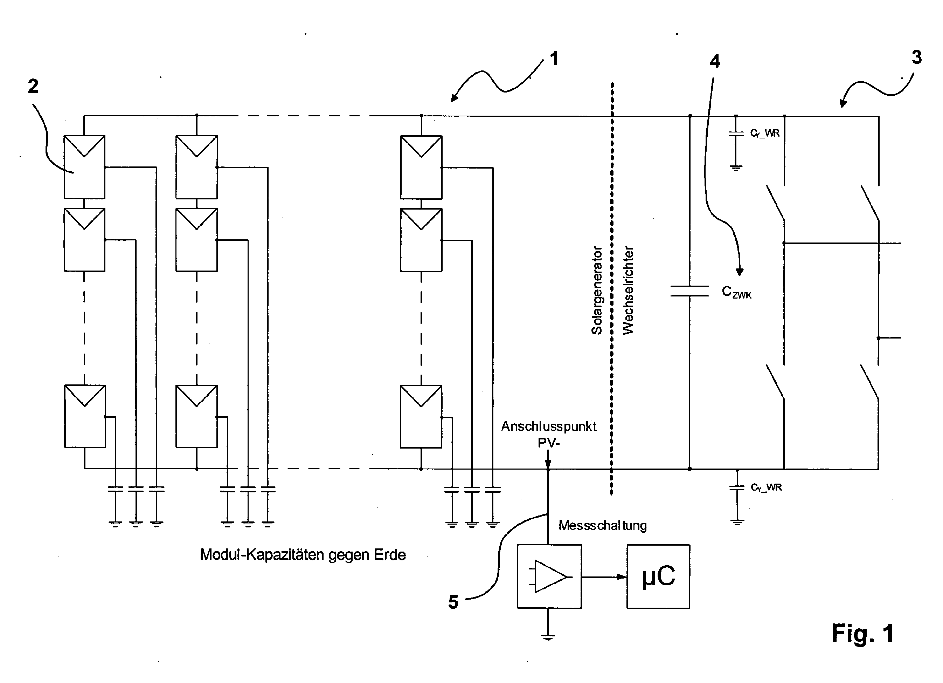

Fig. 1 zeigt eine Photovoltaikanlage mit einem Photovoltaikgenerator 1 mit mehreren in Reihe und parallelgeschalteten Photovoltaikmodulen 2. Zwischen einem Wechselrichter 3 mit Eingangskondensator 4 ist eine Überwachungsschaltung 5 angeordnet. Diese liegt in Reihe mit dem Photovoltaikgenerator 1 und dem Wechselrichter im DC-Kreis.

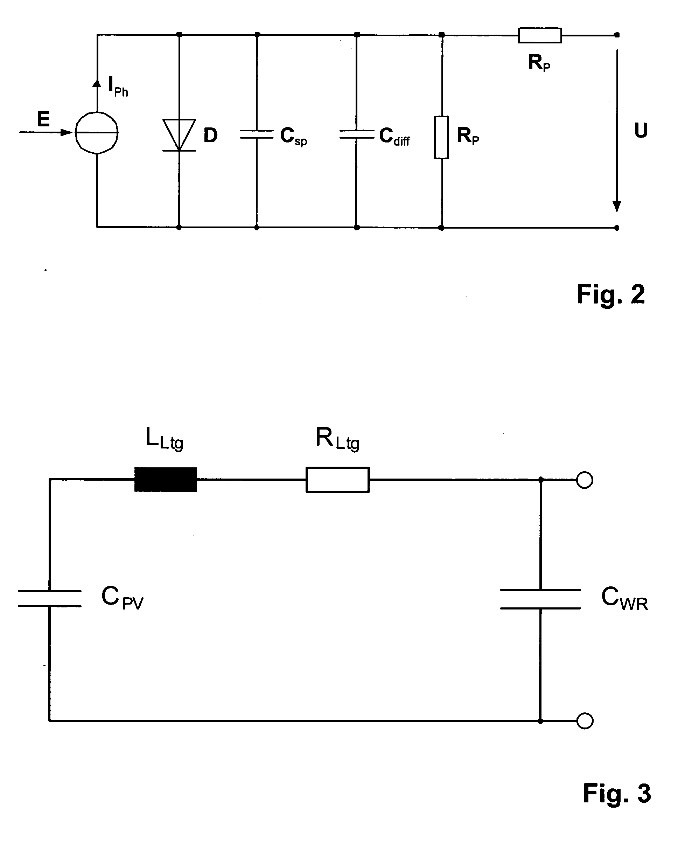

Wie die Fig. 2 veranschaulicht, hat jede Solarzelle ein Ersatzschaltbild mit Kapazitäten Cₛₚ und C_{diff}, einer Diode und Widerständen. Die einzelnen Solarzellen sind in einem nicht näher dargestellten Modul insbesondere mäanderförmig angeordnet, so dass sich eine relativ lange Stromleitung und somit eine signifikante Induktivität ergibt, wie dies dem Ersatzschaltbild gemäß Fig. 3 zu entnehmen ist.

Wird bei mehreren Modulen in Reihe und/oder parallelgeschalteten Solarmodulen eines entnommen, beispielsweise im Falle eines Diebstahls, so ändern sich Kapazitäten bzw. Induktivitäten. Da im Prinzip ein sehr komplexes Schaltungsnetzwerk aus Kondensatoren, Induktivitäten und Widerständen vorhanden ist, muss bei einer einzigen Frequenz nicht zwangsläufig eine deutliche Änderung einer elektrischen Größe erfolgen. Wird ein Wechselstrom eingeprägt, wird bei einer Frequenz der Ausgangsstrom einer Messschaltung kaum verändert, während bei einer anderen Frequenz eine deutliche Signaländerung erfolgt. Dies ist durch eine veränderte Resonanzeigenschaft der Photovoltaikanlage zu erklären.

Genau hier setzt das Verfahren zur Überwachung eines Photovoltaikgenerators 1 zur Stromerzeugung mit einer Anzahl zwischen zwei Außenanschlüssen verschalteten Solarzellen an.

Erfindungsgemäß erfolgt ein wiederholtes Einleiten eines Stroms mit einem Frequenzspektrum in den Generatorstromkreis, eine Erfassung eines Frequenzganges im Frequenzspektrum und eine Erfassung einer Veränderung des Frequenzganges oder einer elektrischen Größe im Frequenzgang zur Überwachung des Photovoltaikgenerators 1.

Vorzugsweise erfolgt eine sinusförmige Einspeisung des Stromes mit einem Frequenzspektrum mit einem ersten Wandler mit Primär- und Sekundärwicklung, der an dem Gleichstromkreis des Generators angeschlossen ist. Weiterhin erfolgt eine Erfassung des Frequenzspektrums mit einem zweiten Wandler mit Primär- und Sekundärwicklung, der in Reihe mit dem ersten Wandler angeordnet ist.

Im Prinzip werden mehrere Wechselstromsignale mit unterschiedlichen Frequenzen eingesetzt.

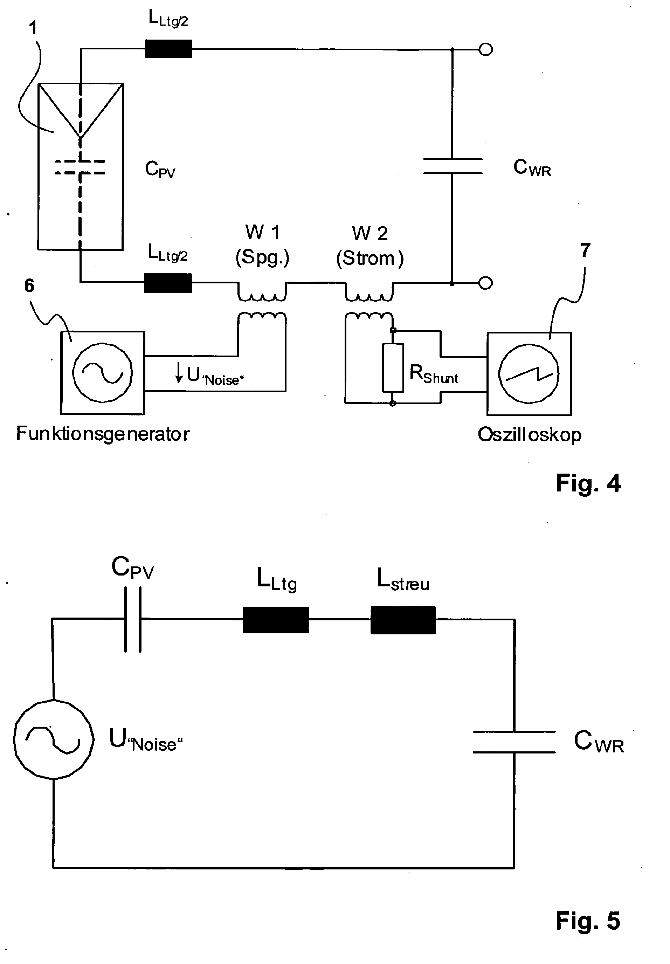

Die in Fig. 4 gezeigte Messschaltung verdeutlicht das Prinzip. In Reihe mit dem Generator 1 liegen zwei Wandler W1 und W2. Jeder hat eine Primär und eine Sekundärwicklung, wobei jeweils eine der Wicklungen im Gleichstrom- bzw. DC-Kreis liegt. Der erste Wandler W1 dient zur Einspeisung des Frequenzspektrums. Hierbei wird ein Funktionsgenerator 6 verwendet, der kontinuierlich seine Frequenz beispielsweise von 100 Hz (f1) bis 500 kHz (f2) ändert. Das bedeutet, dass der eingeprägte Strom mit 100 Hz beginnt, erhöht wird und bei 500 kHz endet. Dieser Vorgang wird zyklisch wiederholt.

An dem zweiten Wandler W2 ist ein Messgerät 7, beispielsweise ein Oszilloskop oder ein Frequenzganganalysator angeschlossen, der den Frequenzgang aufzeichnet, d.h. den Wechselstrom in Abhängigkeit der Frequenz aufzeichnet. Bei einem Oszilloskop kann an den X- Eingang eine der Frequenz proportionale Spannung und an den Y-Eingang die Messspannung angelegt werden. Die Fig. 5 zeigt das Ersatzschaltbild mit der Kapazität des Generators Cₚᵥ, der Eingangskapazität C_{WR} des Wechselrichters und den Leitungsinduktivitäten. Diese bilden einen Schwingkreis, so dass bei einer bestimmten Frequenz bzw. bei der Resonanzfrequenz eine deutliche Signaländerung vorhanden ist. Eine Amplitude steigt plötzlich an, wenn sie in die Nähe der Resonanzfrequenz gelangt. Die Amplitude wird durch die Dämpfung bzw. den ohmschen Widerstand des Ersatzschaltbildes bzw. den Innenwiderstand begrenzt. Da diese sehr gering ist, lassen sich sehr eindeutige Ergebnisse erreichen.

Vorzugsweise wird eine Hilfsgröße aus gemessenen Strom- oder Spannungskurven gebildet und die Veränderung der Hilfsgröße überwacht, wobei oberhalb eines Schwellwertes der Veränderung der Hilfsgröße ein Alarmsignal erfolgt. Die Hilfsgröße wird aus der Summe der gemessenen Strom- oder Spannungsamplituden gebildet.

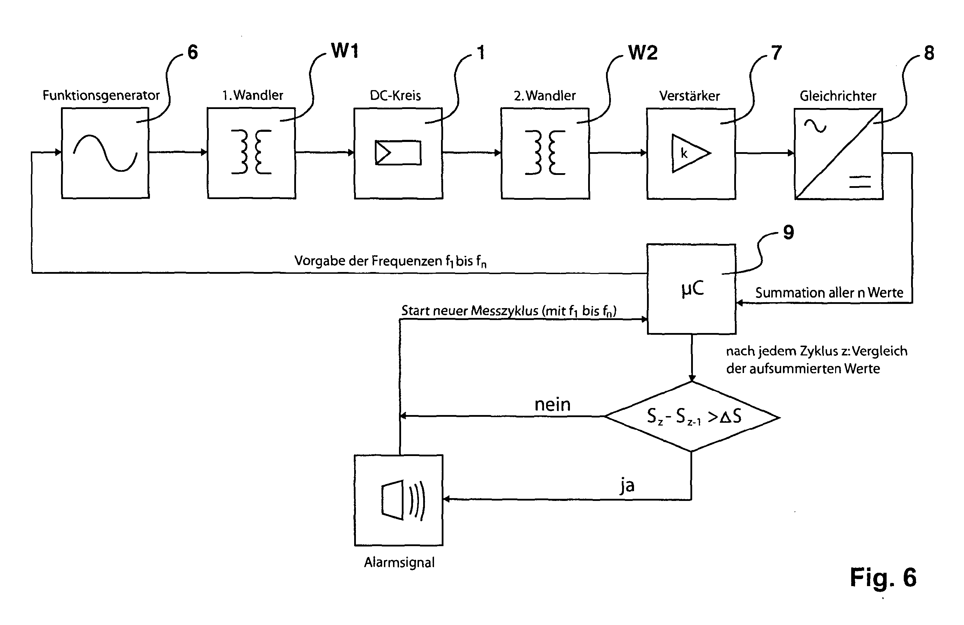

Ein Funktionsbild einer bevorzugten Schaltungsanordnung zur Durchführung dieser bevorzugten Ausführungsform des erfindungsgemäßen Verfahrens zeigt Fig. 6. Der Funktionsgenerator 6 speist den ersten Wandler W1, der wie auch der zweite Wandler W2 in DC-Kreis des Generators 1 liegt. Das Ausgangssignal des zweiten Wandlers wird durch einen Verstärker 7 verstärkt und mittels eines Gleichrichters 8 gleichgerichtet.

Das Ausgangssignal des Gleichrichters wird einem Mikroprozessor 9 zugeführt, der ein Summensignal S_{z} nach einem Frequenzgang bildet. Der Mikroprozessor 9 gibt außerdem dem Funktionsgenerator die Frequenzen f₁ bis fₙ vor und stellt Abweichungen des Frequenzganges fest.

Erfolgt eine Abweichung des Summensignals ΔS und überschreitet diese Abweichung einen Schwellwert, dann erfolgt ein Alarmsignal, wie Fig. 6 zeigt.

Alternativ kann die Hilfsgröße aus einer Integration der Flächen unter den gemessenen Kurven gebildet werden.

Eine Änderung einer durch das Frequenzspektrum messbaren elektrischen Größe kann nicht nur der Strom, wie in den Beispielen erläutert, sein sondern auch eine Impedanz des Generators sein.

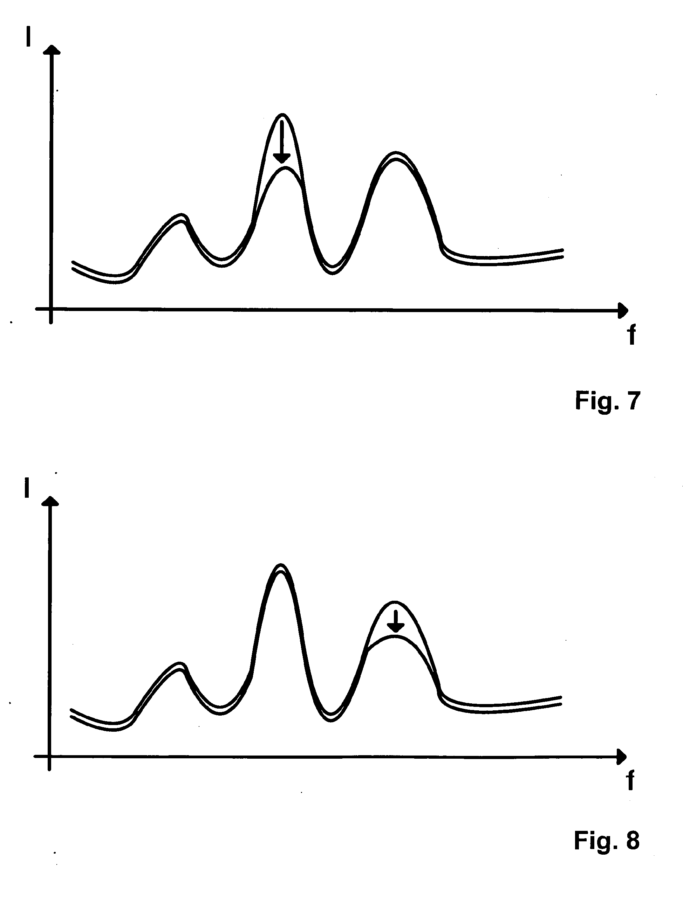

Die Figuren 7 und 8 veranschaulichen mögliche Signaländerungen. Diese zeigen Stromamplituden in Abhängigkeit der Frequenz f.

Wie Fig. 7 zeigt, ändert sich der Frequenzgang beispielsweise nach Entfernen eines Teilgenerators bzw. eines Moduls. Hierbei weist die Photovoltaikanlage beispielsweise drei Resonanzfrequenzen auf. Eine Änderung kann zum Beispiel durch Entnahme eines Moduls durch Diebstahl erfolgen. Hierbei ändert sich nur im Bereich einer bestimmten Frequenz bzw. zweiten Resonanzfrequenz (siehe Pfeil) die Amplitude wie erkennbar durchaus signifikant.

Ein anderes typisches Verhalten zeigt Fig. 8. Hier ändert sich die Amplitude auch deutlich, jedoch bei einer anderen Frequenz bzw. der dritten Resonanzfrequenz (siehe Pfeil).

Die Erfindung ist nicht auf dieses Beispiel beschränkt, so kann das Überwachungsverfahren zur Erkennung von Lichtbögen genutzt werden.

Ein Lichtbogen kann zum Beispiel durch eine Strompfadunterbrechung oder einen Kurzschluss erfolgen. Grundsätzlich können auch andere Schäden am Generator überwacht werden. So ist es beispielsweise möglich, einen durch Hagelschlag oder dergleichen entstandenen Schaden in einem Teilgenerator festzustellen, ohne dass eine teure Überwachungskamera installiert werden muss. Auch andere Arten von Manipulationen zum Beispiel mutwillige Zerstörungen können erkannt werden.

### BEZUGSZEICHENLISTE

- 1: Photovoltaikgenerator
- 2: Photovoltaikmodulen
- 3: Wechselrichter
- 4: Eingangskondensator
- 5: Überwachungsschaltung
- 6: Funktionsgenerator
- 7: Messgerät
- 8: Gleichrichter
- 9: Mikroprozessor

- W1: erster Wandler
- W2: zweiter Wandler

## Patentansprüche

1. Verfahren zur Überwachung eines Photovoltaikgenerators (1) zur Stromerzeugung mit einer Anzahl zwischen zwei Außenanschlüssen verschalteten Solarzellen,
**gekennzeichnet durch**
wiederholtes Einspeisen eines Stroms mit einem Frequenzspektrum in den Generatorstromkreis, dabei jeweils Erfassung eines Frequenzganges im Frequenzspektrum mit dem eingespeisten Strom als Eingangsgröße und einer elektrischen Größe des Generators als Ausgangsgröße, und Erfassung einer Veränderung des Frequenzganges zur Überwachung des Photovoltaikgenerators (1) falls eine Veränderung beim wiederholten Einspeisen auftritt.

2. Verfahren nach Anspruch 1,
**gekennzeichnet durch**
eine Überwachung nur in den Nachtstunden bei Verwendung des Verfahrens zum Erkennen eines Diebstahls oder einer Manipulation, wobei in den Tagstunden ein zweites Verfahren eingesetzt wird.

3. Verfahren nach Anspruch 2,
**dadurch gekennzeichnet,**
**dass** das zweite Verfahren unter Verwendung eines Referenzsensors, der vorzugsweise als Referenzsolargenerator ausgeführt ist, erfolgt.

4. Verfahren nach einem der voranstehenden Ansprüche,
**dadurch gekennzeichnet**,
bei der Erfassung des Frequenzganges als Ausgangsgröße der Strom- oder Spannungsamplitudengang des Generators erfasst wird, eine Hilfsgröße aus gemessenen Strom- oder Spannungskurven gebildet wird und die Veränderung der Hilfsgröße überwacht wird, wobei oberhalb eines Schwellwertes der Veränderung der Hilfsgröße ein Alarmsignal erfolgt.

5. Verfahren nach Anspruch 4,
**dadurch gekennzeichnet,**
**dass** die Hilfsgröße aus der Summe der gemessenen Strom- oder Spannungsamplituden gebildet wird.

6. Verfahren nach Anspruch 4,
**dadurch gekennzeichnet,**
**dass** die Hilfsgröße aus einer Integration der Flächen unter den gemessenen Kurven erfolgt.

7. Verfahren nach einem der voranstehenden Ansprüche,
**dadurch gekennzeichnet,**
**dass** eine Einspeisung des Stroms mit einem Frequenzspektrum mit einem ersten Wandler (W1) mit Primär- und Sekundärwicklung, der an den Gleichstromkreis des Generators angeschlossen ist, und eine Erfassung des Frequenzspektrums mit einem zweiten Wandler (W2) mit Primär- und Sekundärwicklung erfolgt, der in Reihe mit dem ersten Wandler (W1) angeordnet ist.

8. Verfahren nach einem der voranstehenden Ansprüche,
**dadurch gekennzeichnet,**
**dass** eine Einspeisung eines Stroms mit sinusförmigen Frequenzen im Gleichstromkreis des Generators erfolgt.

9. Verfahren nach einem der voranstehenden Ansprüche,
**dadurch gekennzeichnet,**
**dass** die elektrische Größe, deren Änderung im Frequenzspektrum gemessen wird, ein Strom oder eine Impedanz des Generators ist.

10. Verfahren nach einem der voranstehenden Ansprüche
**gekennzeichnet durch**
eine Anwendung bei einem Generator mit mehreren parallel und/oder in Reihe geschalteten Solarmodulen.

11. Verwendung des Verfahrens nach einem der Ansprüche 1-10 zum Erkennen von Diebstahl oder Manipulation am Photovoltaikgenerator.

12. Verwendung des Verfahrens nach einem der Ansprüche 1 bis 10 zum Erkennen von Lichtbögen durch Kontakttrennung oder schadhafte Kontakte des Photovoltaikgenerators (1).

13. Verwendung des Verfahrens nach einem der Ansprüche 1 bis 10 sowohl zum Erkennen von Diebstahl als auch von Lichtbögen am Photovoltaikgenerator.

14. Verwendung einer Schaltungsanordnung zur Durchführung des Verfahrens nach Anspruch 1 in einer Photovoltaikanlage.
